# EUROPÄISCHE PATENTANMELDUNG

(11) **EP 0 568 077 A1**
(43) Veröffentlichungstag der Anmeldung: **03.11.1993**
(21) Anmeldenummer: 93106996.7
(22) Anmeldetag: 29.04.1993
(51) Int. Cl.: F16B 47/00, A01K 63/00

(54) **Haftsaugerhalterung für Aquariengeräte**

(30) Priorität: 30.04.1992 DE 4214249
(71) Anmelder: Tetra Werke Dr.rer.nat. Ulrich Baensch GmbH, 49324 Melle (DE)
(72) Erfinder: Griesinger, Ralf-Edgar, W-4516 Bissendorf 7 (DE)
(74) Vertreter: Mansmann, Ivo

(57) **Zusammenfassung**

Die Erfindung betrifft eine Vorrichtung zur Halterung von Gegenständen, insbesondere Aquarienzubehör, mittels eines oder mehrerer Haftsauger (2), bei denen der zylindrische, mit einer Bohrung (5) versehene aufweitbare Schaft des Haftsaugers (2) in einer Bohrung des zu haltenden Gegenstandes (1) sitzt und durch einen Stopfen (3) fixierbar ist.

## Beschreibung

In der Aquaristik ist es üblich, Bauteile und Vorrichtungen mittels Haftsaugeeinrichtungen an den Wänden des Aquariums zu befestigen. Bekannt sind solche Haftsaugerhalterungen beispielsweise aus DE 26 39 746, DE 29 20 130 oder DE 30 17 230.

Wird nun mittels Haftsauger ein Bauteil, z.B. ein Gerätegehäuse, in ein Aquarium eingebracht und an einer Aquarienwand befestigt, sollte dies derart erfolgen, daß kein oder nur ein geringer Spalt zwischen dem betreffenden Bauteil und der Befestigungswand verbleibt. Eine derartig enganliegende Befestigung ist besonders beim Einbau von Geräten unter Wasser erforderlich, damit vermieden wird, daß Fische sich zwischen Gerät und Befestigungsfläche verklemmen können.

Bei starrer Anbringung des Haftsaugers am Bauteil ist eine enganliegende Befestigung nicht möglich, da der Sauger nach festem Aufdrücken sich stets wieder etwas aufrichtet.

Um diesen Effekt auszuschalten, werden in der DE 29 20 130 Halterungen verwendet, bei denen der Sauger durch einen Exzenterhebel oder ein Gewinde oder Gewindeteilstück gegen das zu befestigende Teil nach dem Andrücken verspannt wird.

Bekannt ist aus DE 26 39 746 ferner eine federnde Aufhängung des Saugers. Diese Lösung hat jedoch den Nachteil, daß nach der Befestigung der Sauger nicht mehr zugänglich ist. Das Bauteil läßt sich dann nur mit großem Kraftaufwand oder unter Zuhilfenahme von Werkzeugen, z.B. einer von der Seite untergeschobenen Messerschneide entfernen. Dabei ist dann eine Beschädigung des Bauteils oder des Haftsaugers eventuell unvermeidbar.

Weiterhin haben die bekannten Lösungen den Nachteil eines hohen Platzbedarfs und des Erfordernisses von mindestens zwei weiteren Bauteilen.

Aufgabe der Erfindung ist deshalb eine leicht lösbare Befestigungsvorrichtung, mit der mittels eines Haftsaugers Gegenstände an einer Fläche, bevorzugt Bauteile an einer Aquarienwand, derart befestigt werden können, daß kein oder allenfalls nur ein sehr geringer Spalt zwischen dem Gegenstand und der Befestigungsfläche verbleibt.

Gegenstand der Erfindung ist daher eine Vorrichtung zur Halterung von Gegenständen, insbesondere Aquarienzubehör, mittels eines oder mehrer Haftsauger, dadurch gekennzeichnet, daß der zylindrische, mit einer Bohrung (5) versehene aufweitbare Schaft des Haftsaugers (2) zunächst axial verschiebbar in einer Bohrung des Gegenstandes (1) sitzt und durch einen Stopfens (3) am zu haltenden Gegenstand (1) fixierbar ist.

Bevorzugt ist die Bohrung (5) des Haftsaugers (2) durchgehend, so daß ein Abziehen des Stopfens (3) einen Druckausgleich unter dem Sauger bewirkt und dieser dadurch leicht von der Befestigungsfläche (4) lösbar ist.

In einer weiteren bevorzugten Form ist die Bohrung (5) des Haftsaugers (2) konisch ausgeführt, so daß der Stopfen (3) eine verstärkte Aufweitung bewirkt.

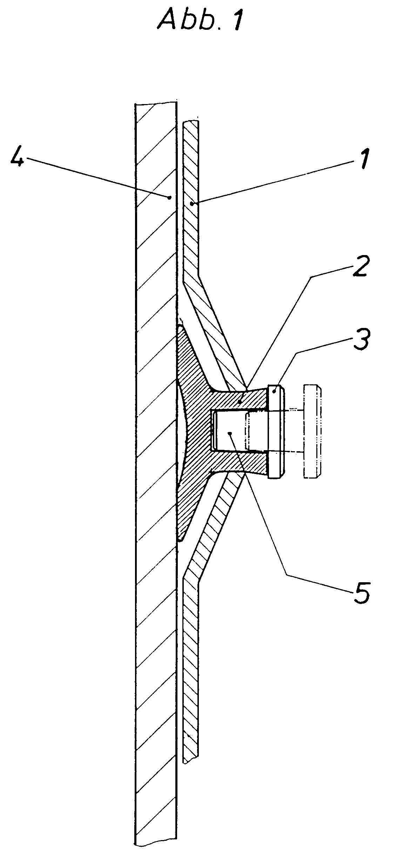

Eine bevorzugte Ausführungsform der erfindungsgemäßen Vorrichtung ist in Abb. 1 dargestellt als Längsschnitt im montierten Zustand. Ein aus einem Elastomer wie beispielsweise Gummi, Silkongummi, PVC bestehender Haftsauger (2) sitzt mit seinem zylindrischen Schaft axial verschiebbar in einer Bohrung des zu befestigenden Gegenstandes (1). Nach Andrücken des Saugers (2) und des zu befestigenden Gegenstandes (1) an die Befestigungsfläche (4), wird der Stopfen (3) in die Bohrung (5) des zylindrischen Schaftes des Saugers (2) hineingedrückt. Dadurch wird der Saugerschaft so aufgeweitet, daß sich der Gegenstand (1) nicht mehr darauf axial beweglich , bzw. vom Sauger abziehbar ist. Eine verbesserte Klemmwirkung auf den Gegenstand (1) läßt sich dadurch erzielen, daß die Bohrung (5) konisch ausgeführt ist, wodurch bei Einbringen des Stopfens (3) in die Bohrung (5) eine verstärkte Aufweitung des Saugerschaftes bewirkt wird.

Zur Demontage wird der Stopfen (3) aus dem Sauger gezogen, wonach sich der Gegenstand (1) leicht abziehen läßt. Eine noch verbesserte Entfernung der Vorrichtung läßt sich dadurch erzielen, daß die Bohrung (5) durch den Haftsauger (2) durchgängig ausgeführt ist. Nach dem Entfernen des Stopfens (3) findet dann ein Druckausgleich zur Andruckseite des Saugers statt, so daß dieser leicht mitsamt dem Gegenstand von der Befestigungsfläche entfernt werden kann.

## Patentansprüche

1. Vorrichtung zur Halterung von Gegenständen, insbesondere Aquarienzubehör, mittels eines oder mehrer Haftsauger, dadurch gekennzeichnet, daß der zylindrische, mit einer Bohrung (5) versehene aufweitbare Schaft des Haftsaugers (2) zunächst axial verschiebbar in einer Bohrung des Gegenstandes (1) sitzt und durch einen Stopfen (3) am zu haltenden Gegenstand (1) fixierbar ist.

2. Vorrichtung gemäß Anspruch 1, dadurch gekennzeichnet, daß die Bohrung (5) des Haftsaugers (2) durchgehend ist.

3. Vorrichtung gemaß Anspruch 1, dadurch gekennzeichnet, daß die Bohrung (5) des Haftsaugers (2) konisch ausgebildet ist.
